Europäisches Patentamt

European Patent Office

Office européen des brevets

(11) Publication number: **0 139 018 B1**

(12) **EUROPEAN PATENT SPECIFICATION**

(45) Date of publication of patent specification: **13.06.90**

(51) Int. Cl.⁵: **G 11 B 5/127**

(21) Application number: **84901220.8**

(22) Date of filing: **16.03.84**

(86) International application number:
**PCT/JP84/00110**

(87) International publication number:
**WO 84/03788 27.09.84 Gazette 84/23**

(54) **Magnetic transducer head assembly having a single magnetic pole type for perpendicular mode recording.**

(30) Priority: **22.03.83 JP 47666/83**
**28.03.83 JP 52157/83**

(43) Date of publication of application:
**02.05.85 Bulletin 85/18**

(45) Publication of the grant of the patent:
**13.06.90 Bulletin 90/24**

(84) Designated Contracting States:
**DE FR GB NL**

(56) References cited:
**EP-A-0 099 831**
**JP-A-58 171 711**
**JP-A-58 203 612**

**PATENTS ABSTRACTS OF JAPAN, vol. 5, no. 77 (P-62)749r, 21st May 1981; & JP-A-56 25 219**

**PATENTS ABSTRACTS OF JAPAN, vol. 5, no. 154 (P-82)826r, 29th September 1981; & JP-A-56 87 219**

(73) Proprietor: **SONY CORPORATION**
**7-35 Kitashinagawa 6-Chome Shinagawa-ku Tokyo 141 (JP)**

(72) Inventor: **HAYAKAWA, Kiyonori Sony Corporation**
**7-35, Kitashinagawa 6-chome Shinagawa-ku Tokyo 141 (JP)**
Inventor: **MISHIMA, Akio Sony Corporation**
**7-35, Kitashinagawa 6-chome Shinagawa-ku Tokyo 141 (JP)**

(74) Representative: **Thomas, Christopher Hugo et al**
**D Young & Co 10 Staple Inn London WC1V 7RD (GB)**

(56) References cited:
**PATENTS ABSTRACTS OF JAPAN, vol. 7, no. 60 (P-182)1205r, 12th March 1983; & JP-A-57 205 810**

**PATENTS ABSTRACTS OF JAPAN, vol. 5, no. 154 (P-82)826r, 29th September 1981; & JP-A-56 87 217**

## Description

This invention relates to a magnetic transducer head assembly having a single magnetic pole type for perpendicular mode recording. Such heads are, for example, suitable for use with a flexible disc magnetic recording medium.

In general, a flexible disc recording apparatus uses one magnetic transducer head to carry out both recording and playback. Such apparatus tends to suffer from mis-tracking caused by a small displacement of the flexible disc upon installing (chucking), or contraction and expansion of the flexible disc due to changes of temperature or humidity. Particularly when re-recording is carried out, the previously recorded data cannot be fully erased due to such mis-tracking, so upon reproducing, accurate data cannot be obtained.

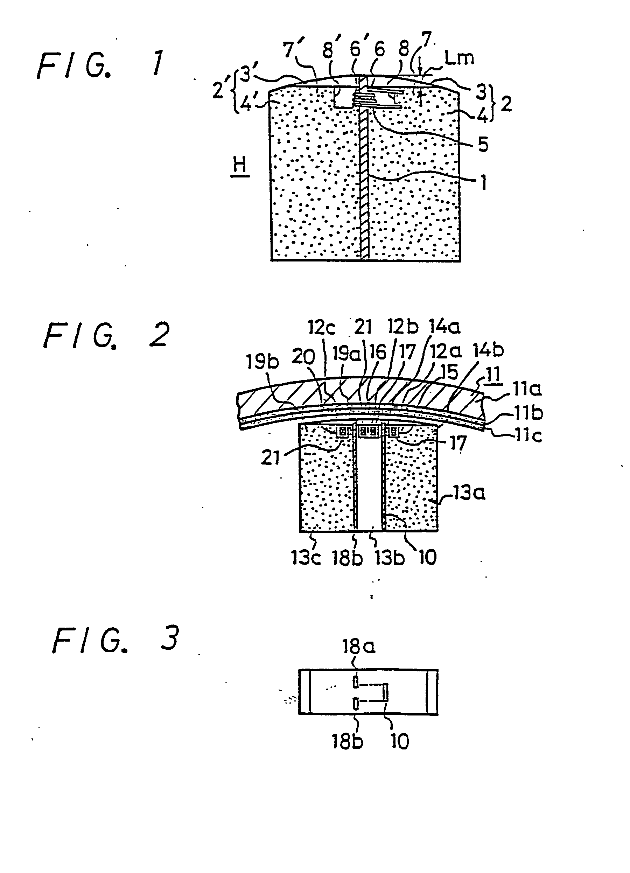

As a recording and reproducing magnetic transducer head for such flexible disc recording apparatus, we have proposed a magnetic transducer head for perpendicular recording mode in JP—A—58/153216, published 12.9.83, which is capable of carrying out high density magnetic recording (short wavelength recording) and which can easily be produced, as shown in Figure 1. Such a magnetic transducer head H is formed such that a main magnetic pole 1 made of a thin film of soft magnetic material having a predetermined width opposes at its one end a magnetic recording medium, and is sandwiched by guard blocks 2 and 2′ and integrated therewith. The guard blocks 2 and 2′ are respectively formed of non-magnetic guard members 3 and 3′, and extend from the contact surface with the magnetic recording medium to a predetermined position, and magnetic core members 4 and 4′ are bonded to the lower surfaces thereof and extend to the rear sides thereof. In the magnetic core members 4 and 4′, there are formed auxiliary pole members 6 and 6′ bonded to the main magnetic pole 1, and wound therearound is a coil 5. Grooves 8 and 8′ magnetically separate the auxiliary pole members 6 and 6′ and return paths for magnetic flux from the main magnetic pole 1. Within the grooves 8 and 8′, the coil is wound around the main magnetic pole 1 through the auxiliary magnetic pole members 6 and 6′. With this magnetic transducer head it is possible to carry out high density magnetic recording.

However, even with this magnetic transducer head, mis-tracking is caused by displacement of the magnetic recording medium upon mounting, or upon contraction or expansion of the magnetic recording medium due to temperature or humidity, so that upon re-writing, the previously recorded data cannot be erased completely. As a result, upon reproducing, accurate data frequently cannot be obtained.

European patent spefication EP—A1—0 099 831, discloses a hybrid read/write head for perpendicular recording media, and similar to the pre-characterizing part of claim 1.

According to the present invention there is provided a magnetic transducer head assembly having a single magnetic pole type for perpendicular mode recording, the head comprising:

a recording and reproducing main magnetic pole made of a thin film of soft magnetic material, having a predetermined width, and confronting at one end thereof a contact surface for a travelling magnetic recording medium;

a pair of erasing magnetic poles made of thin films of soft magnetic material, provided along a width direction of said recording and reproducing main magnetic pole with a spacing smaller than said predetermined width, and confronting at one end thereof said contact surface for the recording medium;

a first coil wound around said recording and reproducing main magnetic pole;

a second coil provided to excite said erasing magnetic poles;

a non-magnetic member provided between said recording and reproducing main magnetic pole and said erasing magnetic poles to integrate them with a predetermined distance therebetween along a running direction of said recording medium; and

an auxiliary core member bonded to said recording and reproducing main magnetic pole;

characterized in that:

said auxiliary core member is formed of a non-magnetic guard member bonded to said recording and reproducing main magnetic pole at said one end thereof and forming said contact surface for the recording medium, and a magnetic core integrated with said non-magnetic guard member, bonded to said recording and reproducing main magnetic pole at a position remote from said one end of said recording and reproducing main magnetic pole;

a groove is provided in said magnetic core to divide said magnetic core into an auxiliary magnetic core portion bonded to said recording and reproducing main magnetic pole and a return path portion which is remote from said contact surface for the recording medium; and

said first coil is wound around said recording and reproducing main magnetic pole through said groove.

The invention will now be described by way of example with reference to the accompanying drawings, throughout which like parts are referred to by like references, and in which:

Figure 1 is a cross-sectional view of a previously proposed magnetic transducer head for perpendicular mode recording;

Figure 2 is a cross-sectional view illustrating an embodiment of complex magnetic transducer head of single magnetic pole type for perpendicular mode recording, and according to the present invention;

Figure 3 is a top view of Figure 2;

Figure 4 is a diagram showing a manufacturing method for producing the embodiment;

Figures 5 to 9 are diagrams for explaining Figure 4;

Figures 10, 12, 15, 16, 25 and 26 are cross-sectional views of other embodiments, respectively;

Figure 11 is a diagram for explaining Figure 10;
Figure 13 is a diagram for explaining Figure 12;
Figure 14 is a diagram for explaining the other embodiments;
Figures 17 to 24 are diagrams for explaining Figure 16; and
Figure 27 is a diagram for explaining Figure 26.

In the embodiments of Figures 2 and 3, a main magnetic pole (10) for recording and reproducing made of a thin film of soft magnetic material, and which is to have one end in contact with a magnetic recording medium 11, is made to have a predetermined width. In a surface opposing the medium 11, the main pole 10 is integrally sandwiched at both sides by non-magnetic guard members 12a and 12b having a predetermined thickness, and a magnetic core 13a and a non-magnetic member 13b are bonded to the lower surfaces of the guard members 12a and 12b so as integrally to sandwich the main pole 10 at both its sides. The magnetic core 13a formed behind the guard member 12a forms a return path for the magnetic flux generated from the main pole 10. In the magnetic core 13a contacting the guard member 12a and in the vicinity of the main pole 10, there is formed a groove 15 which divides the magnetic core 13a into an auxiliary magnetic core portion 14a disposed near the main pole 10 and a return path portion 14b which forms a return path for the magnetic flux generated by the main pole 10. A predetermined groove 16 is formed on the non-magnetic member 13b at its side contacting the guard member 12b. Through these grooves 15 and 16, a recording and reproducing winding 17 is wound on the main pole 10. The medium 11 used here is formed such that on a substrate 11a made of, for example, synthetic resin is formed a high magnetic permeability material layer 11b on which a perpendicular magnetic recording layer 11c is further formed.

In order to avoid cross-talk between the recording/reproducing side and the erasing side, it is better that the area over which the magnetic core 13a and a magnetic core 13c are opposed to each other is made small. The magnetic cores 13a and 13c may be formed of non-magnetic material at their sides remote from the medium.

Main magnetic poles for tunnel erasure are made of thin films of soft magnetic material and are disposed downstream from the main pole 10. The erase poles 18a and 18b are disposed to have a spacing smaller than the width of the main pole 10 in the surface opposing the medium 11, and are sandwiched at both their sides by the guard member 12b, the member 13b and the guard member 12c, with the magnetic core bonded to the rear surface. The magnetic core 13c forms the return path of the magnetic fluxes generated from the erase poles 18a and 18b. In the magnetic core 13c at its side in contact with the guard member 12c and near the erase poles 18a and 18b, there is formed a groove 20 which divides the second magnetic core 13c into a second auxiliary magnetic core portion 19a formed near the erase poles 18a and 18b and a second return path portion 19b for the magnetic flux generated by the erase poles 18a and 18b. Through the groove 20 and the groove 16 of the non-magnetic member 13b, an erase coil 21 is wound around the erase poles 18a and 18b.

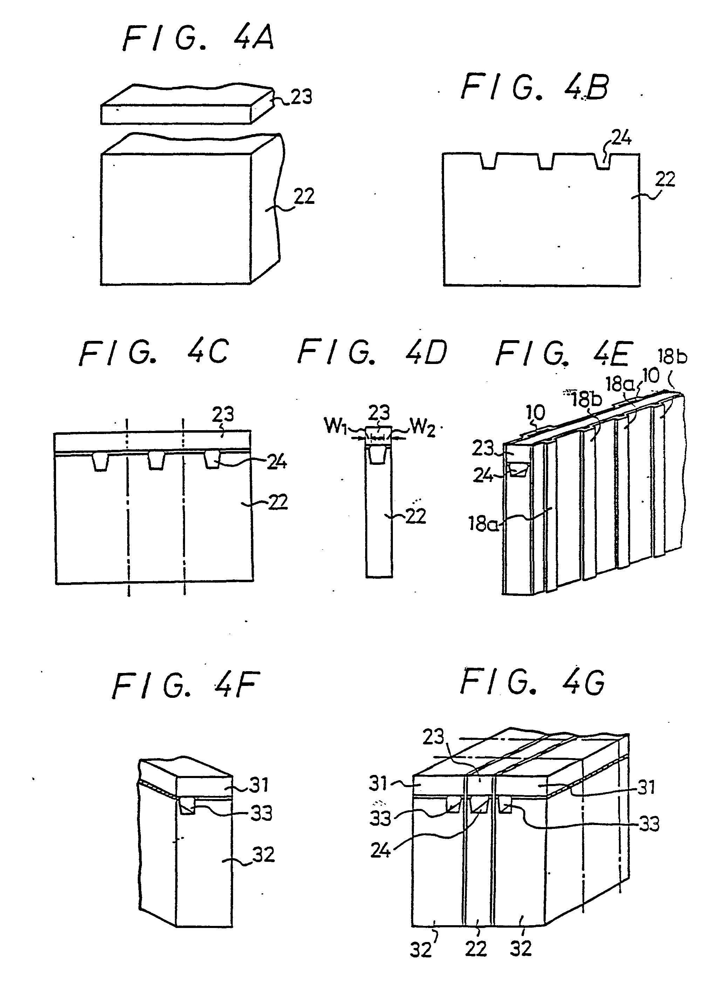

A manufacturing method for producing this complex magnetic transducer head will now be described with reference first to Figure 4. As shown in Figure 4A, two non-magnetic block members 22 and 23 are prepared. It is preferred that the block members 22 and 23 are made of material which is dense, has a thermal expansion coefficient similar to ferrite, and is hard (for example, a non-magnetic ferrit such as Zn-ferrite, forsterite, photo ceram, crystallized glass, barium titanate, calcium titanate, or $Al_2O_3$-TiC or $ZrO_2$-series ceramic). Then, on one block member 22 are formed grooves 24 which will become the groove 16, with a spacing of a predetermined dimension (Figure 4B). The surface in which the grooves 24 are formed is mirror-polished, while the other block member 23 is mirror-polished. The two block members 22 and 23 are bonded together by melt bonding by glass, organic adhesive agent such as epoxy resin, or inorganic adhesive agent such as water glass (Figure 4C). The block members 22 and 23 are cut out at the intermediate portion of the grooves 24 and parallel to the groove 24, and the cut-out surface is mirror-polished. At this time, since the thicknesses (W1 and W2) of the cores at the groove 16 give the diameter of the windings, they are important. In order to improve recording and reproducing sensitivity, it is desired that the diameter of the winding is made as small as possible, thus the thickness of the core is preferably made as small as possible. Therefore, as far as the mechanical strength permits, or as far as the working technique permits, the core is made thin, for example, less than 100 or 50 μm, if possible. It is particularly desired to reduce the thickness of the recording and reproducing winding side, which most affect the sensitivity. Since the tunnel erase side does not affect the sensitivity as much as the recording and reproducing side, then in order to maintain the strength as a whole, the thickness of the recording and reproducing side is reduced, while that of the tunnel erase side is increased to more than the thickness of the recording and reproducing side. Further, the mirror-polished surface and the side surface (the front surface side in Figure 4D) are formed to have a right angle with high precision, and a broken-off part of the edge portion is reduced so as to form a correct edge portion. If the front surface as, for example, shown in Figure 4B, is mirror-polished in advance and then the grooves are formed at a right angle with high accuracy, this condition can be realized relatively easy.

Then, as shown in Figure 4E, the main pole 10 and the erase poles 18a and 18b are formed on the mirror-polished surface. In the manufacturing method, first a layer made of $SiO_2$, $Si_3N_4$, $Al_2O_3$ or

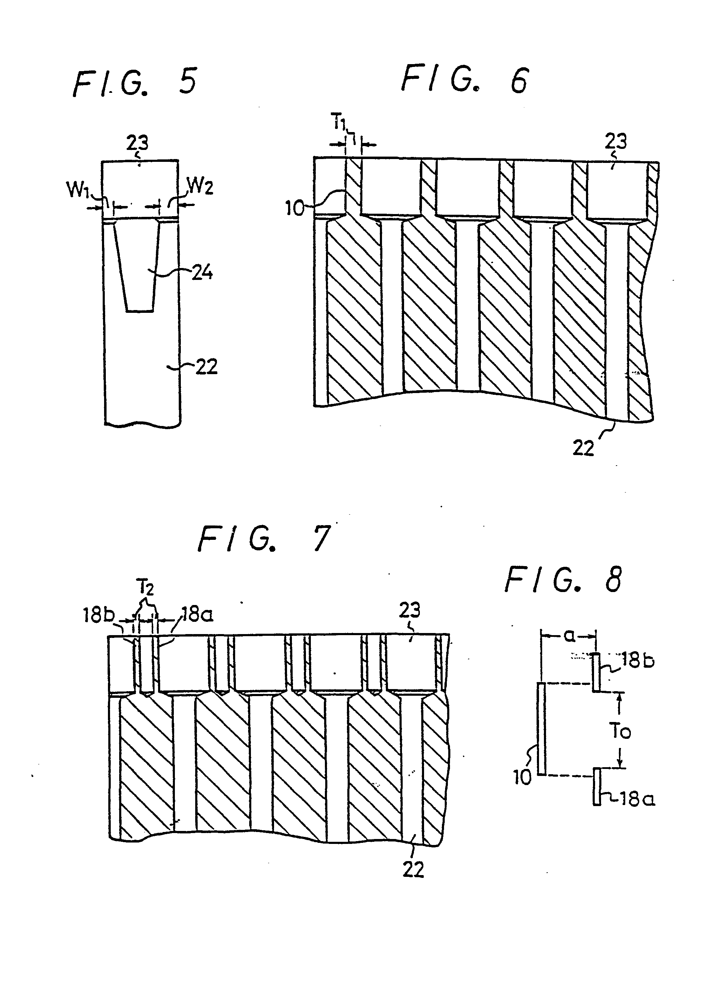

ZrO$_2$ is deposited on both mirror-polished surfaces by sputtering vacuum evaporation or ion plating to have a thickness of about 0.1 to 1.0 µm. The layer is formed under conditions to make it as dense as possible. It is possible to omit the above layer, but this layer can improve the magnetic characteristic of a magnetic thin film which is deposited on the above layer. Then, on one surface (when W1 and W2 in Figure 4D and Figure 5 are not equal to each other, the surface at the side of the smaller thickness, namely, the surface on the W1 side is preferred) is deposited a magnetic thin film (a magnetic film having a high magnetic permeability such as permalloy, sendust alloy, an amorphous magnetic film, for example, Co-Zr or Co-Zr-Nb so as to have a thickness of about 0.05 to 3 µm by sputtering, vacuum evaporation, ion plating or plating. This thickness is determined in consideration of resolution, and recording and reproducing sensitivity, and a thickness ranging from about 0.1 to 0.5 µm is practical.

Then, this magnetic film is subjected to an etching process (wet or dry system) using a photolithography technique so as to make a stripe pattern of a predetermined track width and a spacing. At this time, in order to determine the positioning of the erase poles 18a and 18b which will be deposited later, the stripe is formed at a predetermined position from the reference end portion. The shape of the magnetic film is not limited to a stripe shape, but the portion lower than the bonded portion may be formed wider as shown in Figure 6, thus achieving a high sensitivity.

On the above magnetic film is deposited a hard film made of SiO$_2$, Si$_3$N$_4$, Al$_2$O$_3$ or ZrO$_2$ so as to have a thickness of about 0.1 to 3 µm by sputtering, vacuum evaporation, ion plating or plating as a protection film. Then, on the opposite surface is deposited a magnetic thin film of permalloy, sendust alloy (amorphous magnetic film such as Co-Zr or Co-Zr-Nb) which will become the main magnetic pole for tunnel erase so as to have a thickness of about 0.1 to 5 m by sputtering, vacuum evaporation, ion plating or plating. This thickness is selected so as to achieve excellent erasing sensitivity and in most case, the proper thickness ranges from about 0.5 to 1 µm. Then, the magnetic thin film is etched using a photolithography technique to be a stripe-shaped magnetic film with a predetermined width, and making a pair in correspondence with the respective recording and reproducing magnetic films. Further, on the above magnetic film is deposited a hard film such as SiO$_2$, Si$_3$N$_4$, Al$_2$O$_3$ or ZrO$_2$ to have a thickness of about 0.1 to 3 µ by sputtering, vacuum evaporation or ion plating as a protection film. The shape of the magnetic film for tunnel erase may be formed as shown in Figure 7.

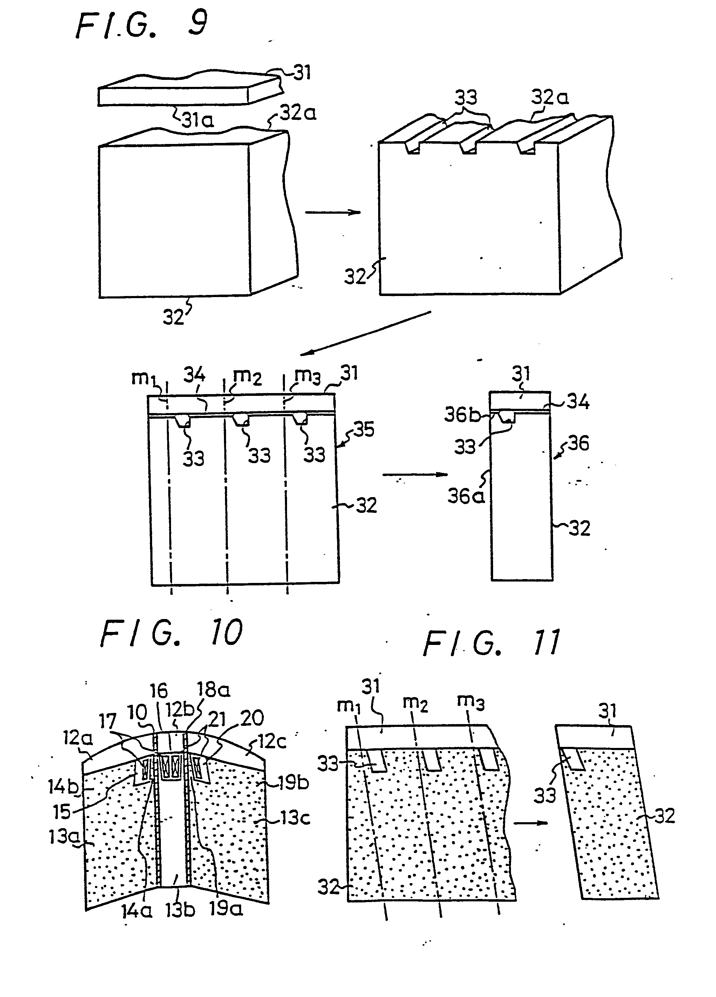

Figure 8 shows a mutual positional relation between the main pole 10 and the erase poles 18a and 18b. The width T1 of the main pole 10 is made wider than the spaning between the erase poles 18a and 18b. After recording by the main pole 10, the track sides are partly erased by the erase poles 18a and 18b. Thus, since the track width finally recorded becomes equal to the spacing To between the erase poles 18a and 18b, the positioning between the main pole 10 and the erase poles 18a and 18b must be precise. Firstly, the main pole 10 is positioned from the end portion of the substrate with high precision and then, the erase poles 18a and 18b are positioned relative to the reference end. At this end, as mentioned before, the reference side surface makes a right angle and the edge thereof must be sharp. As another positioning method, a transparent substrate (it is sufficient that one of the block members 22 or 23 is transparent) is used, and when the second patterning of the magnetic pole is carried out, the position of the pattern is confirmed from the rear.

Next, the complex block is shown in Figure 4f is prepared. This complex block is formed as shown in Figure 9. First, a non-magnetic plate shape block 31 and a magnetic material block 32 are prepared. While as the non-magnetic plate block 31 a material similar to the block member 23 is shown in Figure 4 is preferably used, the material is not limited particularly, so long as it is hard, dense and has a thermal expansion coefficient substantially the same as that of ferrite. The magnetic material block 32 can be of Mn-Zn series ferrite or Ni-Zn-series ferrite. Each surface of the non-magnetic plate block 31 and the magnetic material block 32 is mirror-polished. Then, grooves 33 are formed on the mirror-polished surface 32a of the magnetic material block 32 with a predetermined spacing. Under this condition, the mirror-polished surface 31a of the non-magnetic plate block 31 is opposed to and then bonded to the mirror-polished surface 32a of the magnetic block 32. Although this bonding can be carried out by melt bonding by glass, organic bonding agent such as an epoxy adhesives, or inorganic bonding agent 34 such as water glass, melt bonding by glass is preferred. Since melt bonding by glass is sometimes carried out again in a later process, glass having a high melting temperature so as not to be melted by the second melt bonding is employed. A bonded member 35 is formed of the non-magnetic plate block 31 and the magnetic material block 32 is cut out along the surfaces shown by one-dot chain lines m1, m2, m3 ... across the non-magnetic plate block 31 and the magnetic material block 32 to have a predetermined thickness, and thus one complex block 36 is produced. Then, one surface 36a of this complex block 36 is mirror-polished. At this time, in order to achieve high sensitivity, it is desirable that similarly to the case of Figure 4D, the thickness of the portion which will become an auxiliary core 36b is made as thin as possible, so far as mechanical strength permits. The complex block 36 is bonded to the mirror-polished surfaces shown in Figure 4E by melt bonding by glass, organic adhesive agent such as epoxy resin, or inorganic adhesive agent such as water glass (Figure 4G). Thereafter, the complex block 36 is cut into each magnetic transducer head and the contact surface thereof is polished, and a winding is wound thereof, so the magnetic transducer head of Figure 2 is produced.

While in the above description the patterning of the magnetic pole is carried out on both sides of the central block, it is possible that the main pole 10 and the erase poles 18a and 18b are respectively patterned on the sides of the complex blocks bonded to both sides, and then they are bonded to the central block which was formed in Figure 4D. In this case, it is more difficult to match the main pole 10 and the erase poles 18a and 18b to one another in position.

Since the length Lm of the magnetic pole (the length of the main pole portion protruded from the auxiliary magnetic pole portion 6 as shown in Figure 1) exerts a great influence upon recording and reproducing sensitivity, it is necessary to reduce the length Lm in order to achieve high sensitivity. However, in the magnetic transducer head with the structure as shown in Figure 2, if the length Lm is reduced, the portion of the winding aperture becomes thin and is may become pierced by a hole. Therefore, the bonded portion of the complex substrate may be inclined, and Figure 10 is a cross-sectional view illustrating such a magnetic transducer head. As shown in Figure 10, the central block with the thin film of magnetic material is the same as that in Figure 4, and the blocks at both sides are formed as shown in Figure 11. The other manufacturing steps are the same as those of Figure 4. Thus, even if the length Lm is reduced, It is possible to maintain the strength of the guard block material of the winding aperture portion.

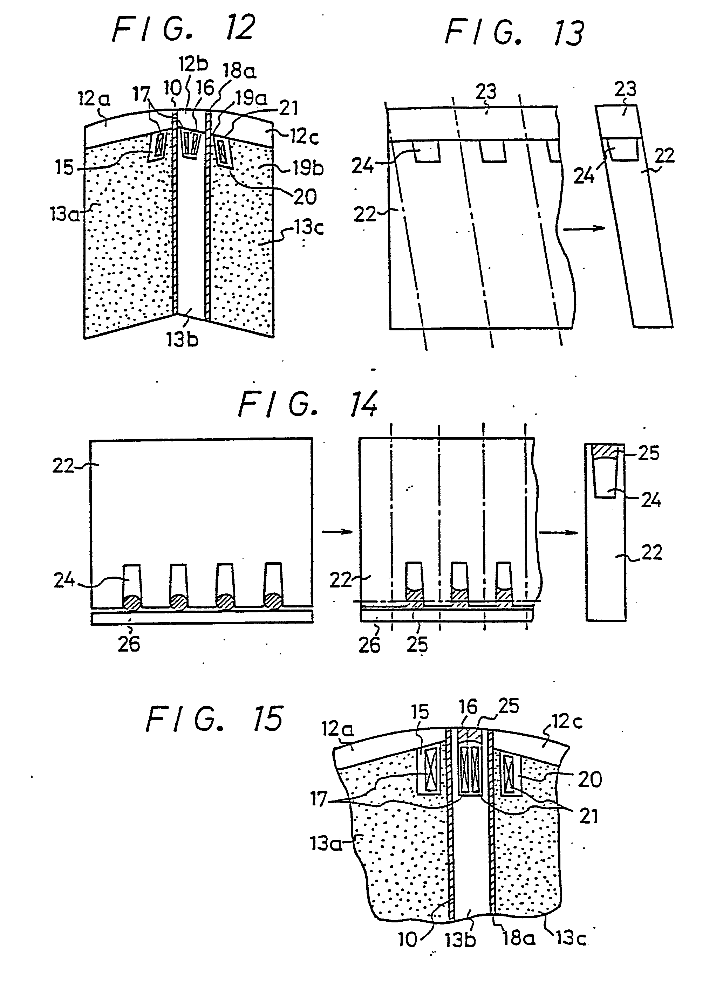

Generally, in order to raise the playback resolution, the main pole 10 must be thin, and the spacing between the magnetic transducer head and the magnetic tape must be made as small as possible. On the other hand, since it is sufficient that the magnetic pole for tunnel erase can carry out dc erasure, the thickness of its magnetic pole can be increased and the problem of the spacing is not so important as with the main pole 10. Therefore, a magnetic transducer head is considered with a main magnetic pole for recording and reproducing disposed in the central portion, which provides a satisfactory contact with the magnetic tape (Figure 12). The centre block is formed such that the winding aperture and the cut-out are inclined as shown in Figure 13. The blocks at both sides of the centre block can be formed in accordance with Figure 11.

For recording and reproducing sensitivity, it is preferable that the impedance of the coil is as small as possible. The impedance of the coil greatly depends on the cross section area of the ferrite core within the coil. In the previously proposed magnetic transducer head, the width (in the track width direction) of the ferrite core within the coil is equal to the thickness of the magnetic transducer head. The portion of the auxiliary core which is required in practice is the portion opposing to the main magnetic pole film. Thus, when the portion except the portion opposing to the main magnetic pole film is filled with glass, it is possible to lower the impedance of the coil.

The centre block can be formed by the following method alternative to the method shown in Figure 4. As shown in Figure 14, a winding groove 24 is formed on the non-magnetic material block 22 and the upper portion thereof is filled with glass 25 (after the groove has been covered with a non-magnetic material plate 26 of the same quality, a glass rod 25a is inserted thereinto, and melted so as to form a bridge of glass). Then, the centre block is cut into respective blocks and the side surface of each block is mirror-polished to form the central block. The characteristic of this block lies in that the surfaces to be mirror-polished are made of the same material, and the bonded portion thereof is never exposed to the mirror-polished surface unlike the centre block as shown in Figure 4. Then the surface is mirror-polished, since the bonded portions are different in hardness, a step may easily occur. Then, when the surface is mirror-polished so as to avoid the step, a good mirror-polishing technique is required, and thus the yield is reduced. The above manufacturing method can remove such defects. Figure 15 is a cross-sectional view illustrating a magnetic transducer head which is provided by this central block. Since the glass 25 is exposed on the contact surface, this magnetic transducer head has a defect that this glass portion is a little concave and is apt to be scratched. Consequently, the contact surface must be mirror-polished with great care.

When this embodiment is used as the recording and reproducing head of, for example, a flexible disc apparatus to carry out recording on the medium 11, a record signal is supplied to the winding 17 of the main pole 10 and the magnetic recording is carried out by the main pole 10, while an erase current dc is supplied to the erase coil 21 of the erase poles 18a, 18b thereby to erase both sides of the record track. Thus, even when the track is displaced a little by some displacement of the magnetic recording medium 11 the previously recorded data is never left unerased upon rewriting, so that upon reproduction, accurate data can be obtained.

In the manufacturing process for producing the above complex magnetic transducer head of single magnetic pole type for perpendicular mode recording, the portions which need the mirror-polishing are formed on a common plane at all times (for example, there is no requirement to mirror-polish two parallel surfaces which have a step therebetween) so that the manufacturing process becomes easier. Further, since the bonded surface is always formed on the common plane, the bonded film can be made extremely thin and the bonding thereof is very easy. Furthermore, since the main magnetic pole made of magnetic thin film is formed by sputtering, vacuum evaporation, ion plating, or plating, its thickness can be controlled easily. In addition, since the width thereof is determined by etching using a photolithography technique, the track width of the track can be made narrow with ease and can be manufactured with high precision. Also, the main pole 10 and the erase poles 18a and 18b can be matched in position with ease.

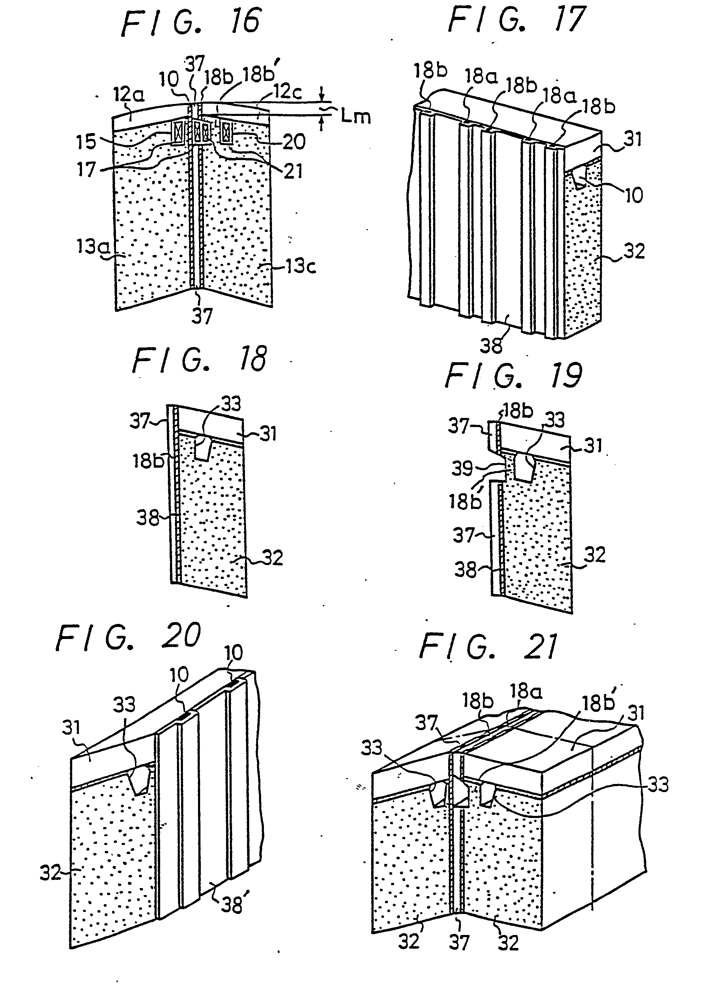

A magnetic transducer head will now be considered in which the spacing a between the recording and reproducing main magnetic pole 10 and the tunnel erase main magnetic poles 18a and 18b is made smaller to enhance the recording and reproducing characteristics. This magnetic transducer head will be described with reference to Figures 16 to 27.

In Figure 16, a non-magnetic material member 37 has a width in the running direction of the magnetic recording medium which is narrow as compared with above embodiment. Accordingly, as shown in Figure 8, the spacing a between the main pole 10 and the erase poles 18a and 18b disposed at both sides of the non-magnetic material member 37 becomes narrow.

An auxiliary magnetic pole member 18b' is magnetically connected to the erase poles 18a and 18b at a position remote backwards from the surface on which the magnetic recording medium is transported, so as to form a magnetic path curved to the downstream side of the magnetic recording medium. With this structure, even if the spacing between the main pole 10 and the erase poles 18a and 18b is made narrow, it is possible to secure the winding spacing for the erase coil 21.

Other portions are formed similarly to Figure 10.

The manufacturing process of this embodiment will now be described. Similarly to the manufacturing process of the embodiment shown in Figure 10, the complex block as shown in Figure 11 is produced. Thereafter, the left-hand side and right-hand side portions of the magnetic transducer head shown in Figure 16 is produced by the following process.

The manufacturing process for producing the right-hand side portion, namely, the portion on the side of the erase poles 18a and 18b will be described. As shown in Figure 17, a protection film made of $SiO_2$, $Si_3N_4$, $Al_2O_3$ or $ZrO_2$ is formed on the surface on which the tunnel erase main magnetic pole films are formed so as to have a thickness of about 0.1 to 1 μm nu sputtering, vacuum evaporation or ion plating. This protection film is to prevent the permeation of impurity from the substrate. Then, as the tunnel erase main magnetic pole film, permalloy, sendust alloy, or an amorphous magnetic alloy such as Co-Zr or Co-Zr-Nb is deposited on the surface by sputtering, vacuum evaporation, ion plating or plating and is then subjected to etching treatment using a photolithography technique to have a predetermined dimension or thickness of about 0.1 to 5 μm, thereby to form the erase poles 18a and 18b. At this time, in order to facilitate positioning upon bonding with the recording and reproducing head, masking is carried out in such a manner that the erase poles 18a and 18b are positioned at a predetermined position from the high precision surface. As a protection film 38, a film made of $SiO_2$, $Si_3N_4$, $Al_2O_3$ or $ZrO_2$ is deposited thereon to have a thickness of about 0.5 to 3 μm by sputtering, vacuum evaporation or ion plating.

Then, the non-magnetic material member 37 is bonded thereon so as to isolate the main pole 10 and the erase poles 18a and 18b from one another as shown in Figure 18. Preferably, this non-magnetic material member 37 is made of the same material as that of the guard members 12a and 12c, and has a thikkness of about 50 to 200 μm. The reason for this is that if the thickness thereof is made less, the recordign and reproducing main magnetic pole and the tunnel erase main magnetic poles become too close to one another, resulting in a problem of leakage magnetic flux, while if the thickness is too large, this magnetic transducer head becomes the same as that shown in Figure 10. It is possible for the non-magnetic material member 37 having a thickness of 50 to 200 μm to be bonded directly, or the non-magnetic material member 37 of, for example, 500 μm thickness is bonded and then abraded and polished so as to have a predetermined thickness. Then, there is formed a groove 39 for the erase coil 21 and the recording and reproducing winding 17 with a predetermined dimension as shown in Figure 19. At this time, the magnetic material portion 18' which is formed by the previously formed groove 33 and the groove 39 forms a part of the tunnel erase main magnetic poles. Properly, the thickness thereof is about 200 to 300 μm. If the thickness is less, the core will be cracked upon forming the groove, while if the thickness is too large, the diameter of the erase coil 21 becomes large, so that the coil impedance is increased, and the recording and reproducing efficiency is reduced.

Next, an explanation will be given of a manufacturing method for producing the left-hand side portion, namely, the portion on the side of recording and reproducing main magnetic pole. As shown in Figure 20, after the surface of the complex block has been mirror-polished, a high permeability magnetic film such as permalloy, sendust alloy, or amorphous magnetic alloy such as Co-Zr or Co-Zr-Nb which becomes the main pole 10 is deposited on the mirror-polished surface, and is then subjected to etching by using a photolithography technique so as to have a predetermined dimension. The bonded surface of the magnetic core 13a and the guard member 12a forms an acute angle relative to the main pole 10. In order to match the main pole 10 and the erase poles 18a and 18b with one another in position, the side surface of the magnetic material pole surface and the side surface of the magnetic material block are made to form a right angle with high precision. Then, the position of the main pole 10 is determined in advance in order that when the reference surfaces of the left and right complex blocks are contacted to each other, they are arranged at a predetermined position. With the reference surfaces made coincident with each other, the two blocks thus made are bonded together by melt bonding by glass, organic adhesive agent such as epoxy resin, or inorganic adhesive agent such as water glass (Figure 21). Then, the contact surface with the magnetic record medium is cylindrically polished to make the magnetic pole film have a predetermined length and the complex block is separately cut into respective magnetic block members. Thereafter, the magnetic block is bonded to a base substrate and subjected to the recording and reproducing wiring treatment and the tunnel erase winding treatment, so forming the complex magnetic transducer head of single magnetic pole type for perpendicular mode recording.

As described above, according to this embodiment, since the magnetic path, which is magnetically connected to the erase poles 18a and 18b, and curved from these poles to the downstream of the magnetic recording medium, is formed to secure the winding spacing, it is possible to reduce the distance or spacing between the recording and reproducing main magnetic pole and the tunnel erase main magnetic poles without deteriorating the excellent electromagnetic transducer characteristic.

As a result, it is possible to reduce the delay time from when the magnetic record medium contacts the main pole 10 to when the magnetic record medium contacts the erase poles 18a and 18b, thus the recording and playback can be carried out satisfactorily.

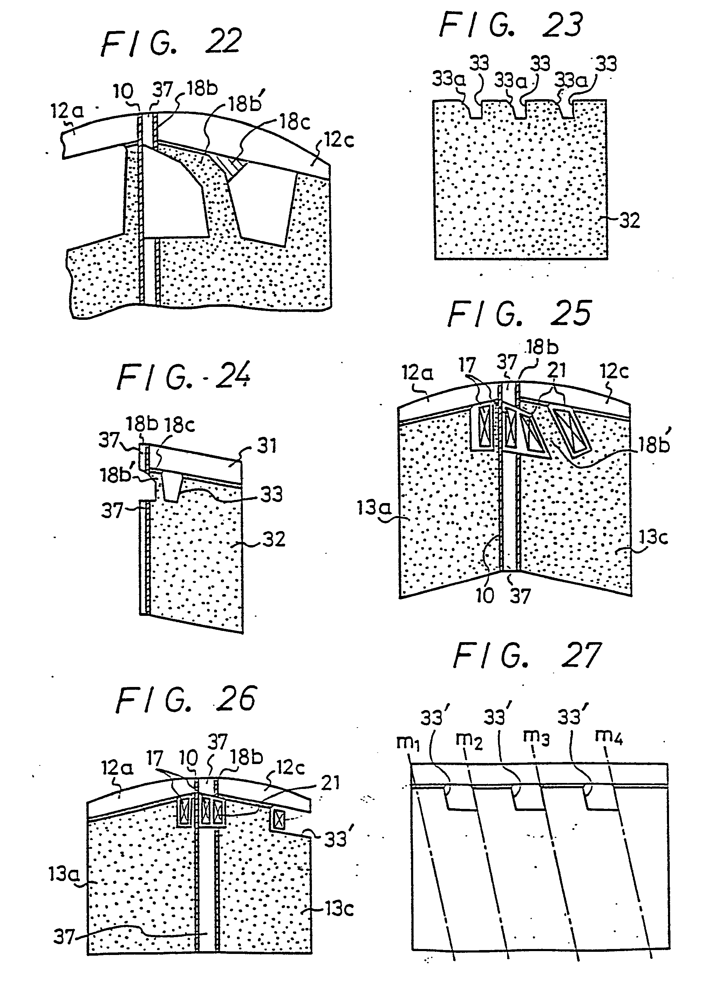

Preferably, the magnetic material portion 18b' in the above embodiment is formed with the smooth shape as shown in Figure 22. At this time, the magnetic material portion is preferably reinforced by, for example, glass 18c. When the magnetic material portion is formed smooth as above, the leakage magnetic flux is decreased and it is possible to alleviate the decline of efficiency which is caused by the fact that the free end portion of the erase main magnetic pole (the portion contacting the record medium) does not exist on the extension of the centre of the coil 21. In order to form the magnetic material portion as such smooth shape, when the groove 33 is formed, and edge portion 33a of the groove is cut to the predetermined shape as shown in Figure 23. As shown in Figure 24, when the non-magnetic plate shape block 31 and the magnetic material block 32 are bonded to each other by glass, the reinforcing glass 18c can be simultaneously provided therebetween. Such smooth shape may be a cylindrical shape.

Preferably, the portion of the coil 21 of the tunnel erase main magnetic pole is inclined as shown in Figure 25.

Figure 26 shows another embodiment of this invention. In this embodiment, the groove 33 for the winding of the tunnel erase main magnetic pole in the embodiment shown in Figure 16 is formed as a cut-out groove 33'. The other portions are formed similarly to those in the embodiment shown in Figure 16. This embodiment can achieve the same action and effect as those of the embodiment in Figure 16 and in addition, there is an advantage that the winding becomes easy.

The manufacturing method therefore is nearly the same as that in the embodiment of Figure 16, but differs in that as shown in Figure 27, the cut-out groove 33' is formed wider and the cut-out surfaces m1, m2 ... are positioned as shown in the figure.

Furthermore, it is possible for the coil on the erase side to be formed as a thin coil on the interface between the magnetic core portion and the guard member of the contact surface, and for the erasing main magnetic pole to be magnetically connected to the magnetic core portion at the centre of the thin film coil.

**Claims**

1. A complex magnetic transducer head assembly having a single magnetic pole type for perpendicular mode recording, the head comprising:

a recording and reproducing main magnetic pole (10) made of a thin film of soft magnetic material, having a predetermined width, and confronting at one end thereof a contact surface for a travelling magnetic recording medium (11);

a pair of erasing magnetic poles (18a, 18b) made of thin films of soft magnetic material, provided along a width direction of said recording and reproducing main magnetic pole (10) with a spacing smaller than said predetermined width, and confronting at one end thereof said contact surface for the recording medium (11);

a first coil (17) wound around said recording and reproducing main magnetic pole (10);

a second coil (21) provided to excite said erasing magnetic poles (18a, 18b);

a non-magnetic member (13b) provided between said recording and reproducing main magnetic pole (10) and said erasing magnetic poles (18a, 18b) to integrate them with a predetermined distance therebetween along a running directon of said recording medium (11); and

an auxiliary core member bonded to said recording and reproducing main magnetic pole (10);

characterized in that:

said auxiliary core member is formed of a non-magnetic guard member (12a) bonded to said recording and reproducing main magnetic pole (10) at said one end thereof and forming said contact surface for the recording medium (11), and a magnetic core (13a) integrated with said non-magnetic guard member (12a), bonded to said recording and reproducing main magnetic pole (10) at a position remote from said one end of said recording and reproducing main magnetic pole (10);

a groove (15) is provided in said magnetic core (13a) to divide said magnetic core (13a) into an auxiliary magnetic core portion (14a) bonded to said recording and reproducing main magnetic pole (10) and a return path portion (14b) which is remote from said contact surface for the recording medium (11); and

said first coil (17) is wound around said recording and reproducing main magnetic pole (10) through said groove (15).

2. A transducer head assembly according to claim 1 further comprising a second auxiliary core member bonded to said erasing magnetic poles (18a, 18b), said second auxiliary core member being formed of a second non-magnetic guard member (12c) bonded to said erasing magnetic poles (18a, 18b) at said one end thereof and forming said contact surface for said recording medium (11), and a second magnetic core (13c) integrated with said second non-magnetic guard member (12c) and bonded to said erasing magnetic poles (18a, 18b) at a position remote from said one end of said erasing magnetic poles (18a, 18b), a second groove (20) being provided in said second magnetic core (13c) to divide said second magnetic core (13c) into a second auxiliary magnetic core portion (19a) bonded to said erasing magnetic poles (18a, 18b) and a second return path portion (19b) which is remote from said contact surface for the recording medium (11), and said second coil (21) being wound through said second groove (20).

3. A transducer head assembly according to claim 1 wherein a bonding surface of said magnetic core (13a) with said non-magnetic guard member (12a) becomes more distant from said magnetic recording medium (11) as said bonding surface becomes more distant from said recording and reproducing main magnetic pole (10).

4. A transducer head assembly according to claim 2 wherein a bonding surface of said second magnetic core (13c) with said second non-magnetic guard member (12c) becomes more distant from said magnetic recording medium (11) as said bonding surface becomes more distant from said erassing magnetic poles (18a, 18b).

**Patentansprüche**

1. Zusammengesetzte magnetische Wandlerkopfeinheit mit einem Magnetpol zur Senkrechtaufzeichnung

mit einem Aufnahme/Wiedergabe-Hauptmagnetpol (10), der als Dünnfilm aus weichmagnetischem Material ausgebildet ist eine vorbestimmte Breite hat und mit einem seiner Endbereiche einer Kontaktfläche für ein sich bewegendes magnetisces Aufzeichnungsmedium (11) gegenüberliegt,

mit einem Paar magnetischer Löschpole (18a, 18b), die als Dünnfilme aus weichmagnetischem Material ausgebildet sind und in Breitenrichtung des Aufnahme/Wiedergabe-Hauptmagnetpols (10) mit einem gegenseitigen Abstand angeordnet sind, der kleiner ist als die genannte vorbestimmte Breite, und die mit einem ihrer Endbreiche der genannten Kontaktfläche für das Aufzeichnungsmedium (11) gegenüberliegen,

mit einer ersten Spule (17), die um den Aufnahme/Wiedergabe-Hauptmagnetpol (10) gewikkelt ist,

mit einer zweiten Spule (21), die so angeordnet ist, daß sie die magnetischen Löschpole (18a, 18b) erregt,

mit einem nichtmagnetischen Teil (13b), das zwischen dem Aufnahme/Weidergabe-Hauptmagnetpol (10) und den magnetischen Löschpolen (18a, 18b) angeordnet ist und diese so verbindet, daß zwischen ihnen ein vorbestimmter Abstand in Laufrichtung des Aufzeichnungsmediums (11) vorhanden ist, und

mit einem Hilfskernteil, das mit dem Aufnahme/Wiedergabe-Hauptmagnetpol (10) verklebt ist,

dadurch gekennzeichnet,

daß das Hilfskernteil aus einem nichtmagnetischen Abdeckteil (12a), das in dem genannten einen Endbereich des Aufnahme-Wiedergabe-Hauptmagnetpols (10) mit diesem verklebt ist und die Kontaktfläche für das Aufzeichnungsmedium (11) bildet, und einem mit diesem nichtmagnetischen Abdeckteil (12a) integrierten Magnetkern (19a) besteht, der mit dem Aufnahme/Wiedergabe-Hauptmagnetpol (10) an einer von dem genannten einen Endbereich des Hauptmagnetpols (10) entfernten Stelle verklebt ist,

daß in dem Magnetkern (13a) eine Nut (15) vorgesehen ist, durch die Magnetkern (13a) in einen mit dem Hauptmagnetpol (10) verklebten Hilfsmagnetkernteil (14a) und einen von der Kontaktfläche für das Aufzeichnungsmedium (11) entfernten Flußrückführungsteil (14b) aufgeteilt ist, und

daß die erste Spule (17) in dieser Nut (15) um den Hauptmagnetpol (10) für die Aufnahme und Wiedergabe gewickelt ist.

2. Wandlerkopfeinheit nach Anspruch 1, ferner mit einem zweiten Hilfskernteil, das mit den magnetischen Löschpolen (18a, 18b) verklebt ist und aus einem zweiten nichtmagnetischen Abdeckteil (12c), das an dem genannten einen Endbereich mit den magnetischen Löschpolen (18a, 18b) verklebt ist und die Kontaktfläche für das Aufzeichnungsmedium (11) bildet, und einem mit dem zweiten nichtmagnetischen Abdeckteil (12c) integrierten zweiten Magnetkern (13c) besteht, der mit den magnetischen Löschpolen (18a, 18b) an einer von dem genannten einen Endbereich der magnetischen Löschpole (18a, 18b) entfernten Stelle verklebt ist, wobei in dem zweiten Magnetkern (13c) eine zweite Nut (20) vorgesehen ist, durch die der zweite Magnetkern (13c) in ein zweites mit dem magnetischen Löschpolen (18a, 18b) verklebtes Hilfsmagnetkernteil (19a) und ein zweites von der Kontaktfläche für das Aufzeichnungsmedium (11) entferntes Flußrückführungsteil (19b) aufgeteilt ist, und wobei die zweite Spule (21) in dieser zweiten Nut (20) gewickelt ist.

3. Wandlerkopfeinheit nach Anspruch 1, bei der die zwischen der Klebefläche des Magnetkerns (13a) mit dem nichtmagnetischen Abdeckteil (12a) und dem magnetischen Aufzeichnungsmedium (11) liegende Entfernung größer wird, wenn die Entfernung zwischen dieser Klebefläche und dem Aufnahme/Wiedergabe-Hauptmagnetpol (10) größer wird.

4. Wandlerkopfeinheit nach Anspruch 2, bei der die zwischen der Klebefläche des zweiten Magnetkerns (13c) mit dem zweiten nichtmagnetischen Abdeckteil (12c) und dem magnetischen Aufzeichnungsmedium (11) liegende Entfernung größer wird, wenn die Entfernung zwischen dieser Klebefläche und dem Löschpolen (18a, 18b) größer wird.

**Revendications**

1. Ensemble à tête complexe à transducteur magnétique ayant un seul pôle magnétique et destiné à l'enregistrement en mode perpendiculaire, la tête comprenant:

un pôle magnétique principal (10) d'enregistrement et de lecture formé d'une couche mince d'un matériau faiblement ferromagnétique, ayant une largeur prédéterminée et tourné, à une première extrémité, vers une surface de contact avec un organe d'enregistrement magnétique mobile (11),

une paire de pôles magnétiques d'effacement (18a, 18b) formés de film mince d'un matériau faible ferromagnétique, placés en direction transversale par rapport au pôle magnétique principal d'enregistrement et de lecture (10), avec un espacement inférieur à ladite largeur prédéterminée et tournés, à une première extrémité, vers une surface de contact avec l'organe d'enregistrement (11),

un premier bobinage (17) formé autour du pôle magnétique principal d'enregistrement et de lecture (10),

un second bobinage (21) destiné à exciter les pôles magnétiques d'effacement (18a, 18b),

un organe non magnétique (13b) placé entre le pôle magnétique principal (10) d'enregistrement et de lecture et les pôles magnétiques d'effacement (18a, 18b) afin qu'il soit intégré avec une distance prédéterminée entre eux dans une direction de déplacement du support d'enregistrement (11), et

un organe à noyau auxiliaire collé au pôle magnétique principal d'enregistrement et de lecture (10),

caractérisé en ce que:

l'organe à noyau auxiliaire est formé d'un organe non magnétique de garde (12) collé au pôle magnétique principal d'enregistrement et de lecture (10) à sa première extrémité et formant la surface de contact avec le support d'enregistrement (11), et un noyau magnétique (13a) intégré à l'organe non magnétique de garde (12a), collé au pôle magnétique principal (10) d'enregistrement et de lecture à un emplacement distance de la première extrémité de ce pôle magnétique principal (10),

une gorge (15) est formée dans le moyau magnétique (13a) afin qu'elle sépare le noyau magnétique (13a) en une partie auxiliaire de noyau magnétique (14a) collée au pôle magnétique principal (10) d'enregistrement et de lecture et une partie (14b) de trajet de retour qui est distante de la surface de contact avec le support d'enregistrement (11), et

le premier bobinage (17) est enroulé autour du pôle magnétique principal (10) d'enregistrement et de lecture dans la gorge (15).

2. Ensemble à tête à transducteur selon la revendication 1, comprenant en outre un second organe à noyau auxiliaire collé aux pôles magnétiques d'effacement (18a, 18b), le second organe à noyau auxiliaire étant formé d'un second organe non magnétique de garde (12c) collé aux pôles magnétiques d'effacement (18a, 18b) à la première extrémité déformant la surface de contact avec le support d'enregistrement (11), et un second noyau magnétique (13c) intégré au second organe non magnétique de garde (12c) et collé aux pôles magnétiques d'effacement (18a, 18b) à un emplacement distant de la première extrémité des pôles magnétiques d'effacement (18a, 18b), une seconde gorge (20) étant formée dans le second noyau magnétique (13c) afin qu'elle divise le second noyau magnétique (13c) en une seconde partie auxiliaire de noyau magnétique (19a) collée aux pôles magnétiques d'effacement (18a, 18b) et une seconde partie (19b) de trajet de retour qui est distante de la surface de contact avec le support d'enregistrement (11), et le second bobinage (21) étant enroulé dans la second gorge (20).

3. Ensemble à tête à transducteur selon la revendication 1, dans lequel la surface de collage du noyau magnétique (13a) sur l'organe non magnétique de garde (12a) devient plus distante du support d'enregistrement magnétique (11) lorsque la surface de collage devient plus distante du pôle magnétique principal (10) d'enregistrement et de lecture.

4. Ensemble à tête à transducteur selon la revendication 2, dans lequel une surface de collage du second noyau magnétique (13c) sur le second organe non magnétique de garde (12c) devient plus distante du support d'enregistrement magnétique (11) lorsque la surface de collage devient plus distante des pôles magnétiques d'effacement (18a, 18b).

FIG. 1

FIG. 2

FIG. 3

**EP 0 139 018 B1**

FIG. 4A

FIG. 4B

FIG. 4C

FIG. 4D

FIG. 4E

FIG. 4F

FIG. 4G

2

## FIG. 5

## FIG. 6

## FIG. 7

## FIG. 8

FIG. 9

FIG. 10

FIG. 11

FIG. 12

FIG. 13

FIG. 14

FIG. 15

## FIG. 16

## FIG. 17

## FIG. 18

## FIG. 19

## FIG. 20

## FIG. 21

FIG. 22

FIG. 23

FIG. 24

FIG. 25

FIG. 26

FIG. 27